(19) Europäisches Patentamt

European Patent Office

Office européen des brevets

(11) Veröffentlichungsnummer: **0 171 591 B1**

(12) **EUROPÄISCHE PATENTSCHRIFT**

(45) Veröffentlichungstag der Patentschrift: **20.01.93**

(21) Anmeldenummer: **85108423.6**

(22) Anmeldetag: **08.07.85**

(51) Int. Cl.⁵: **C08L 67/06**, C08F 299/04

Die Akte enthält technische Angaben, die nach
dem Eingang der Anmeldung eingereicht wurden
und die nicht in dieser Patentschrift enthalten sind.

(54) **Lagerfähige schwundarm härtbare ungesättigte Polyesterharze.**

(30) Priorität: **18.07.84 DE 3426425**

(43) Veröffentlichungstag der Anmeldung:
**19.02.86 Patentblatt 86/08**

(45) Bekanntmachung des Hinweises auf die
Patenterteilung:
**20.01.93 Patentblatt 93/03**

(84) Benannte Vertragsstaaten:
**AT DE FR GB IT NL SE**

(56) Entgegenhaltungen:
**CH-A- 548 434        FR-A- 2 074 378
FR-A- 2 305 465        US-A- 3 668 178
US-A- 3 862 064        US-A- 4 172 059**

(73) Patentinhaber: **DSM N.V.
Het Overloon 1
NL-6411 TE Heerlen(NL)**

(72) Erfinder: **Brassat, Bert, Dr.
Bethelstrasse 24
W-4150 Krefeld(DE)**
Erfinder: **Walter, Oskar, Dipl.-Ing.
Buscher Holzweg 16
W-4150 Krefeld(DE)**
Erfinder: **Hess, Bernhard, Dr.
Kaldenhausener Strasse 84
W-4130 Moers 2(DE)**

**Beschreibung**

Die Erfindung betrifft Formmassen auf Basis ungesättigter Polyesterharze, d. h. $\alpha,\beta$-ethylenisch ungesättigter Polyester und damit copolymerisierbarer ethylenisch ungesättigter Monomerer, die schwundarm gehärtet werden können und diese Eigenschaften beim Lagern über längere Zeit unverändert behalten.

Formmassen auf Basis ungesättigter Polyesterharze mit Zusätzen von Füllstoffen und/oder Verstärkungsmitteln ergeben bei der Härtung Formteile mit hoher Festigkeit, Steifheit, Wärmeformbeständigkeit und Resistenz gegen Lösungsmittel und andere Chemikalien. Sie haben daher als wertvolle Konstruktionswerkstoffe große Bedeutung erlangt. Der beim Härtungsvorgang auftretende Schwund hat in der Vergangenheit ihren Einsatz eingeschränkt, da als störende Folgen Einfallstellen, innere Spannungen, Verzugserscheinungen, Welligkeit und Oberflächenrauhigkeit an den daraus hergestellten Formteilen auftraten. Zur Herstellung von Teilen, an die hohe Anforderungen in Bezug auf Maßhaltigkeit, Glätte und ebene Oberfläche gestellt werden, z.B. großflächige Karosserieteile im sichtbaren Bereich von Kraftfahrzeugen, sind deshalb ungesättigte Polyesterharze in nicht modifizierter Form ungeeignet.

Durch bestimmte Zusätze läßt sich der Polymerisationsschwund ungesättigter Polyesterharze stark reduzieren oder völlig kompensieren. Derartige schwundarm härtbare Systeme werden als low-profile-Systeme (LP-Systeme), die Zusätze als low-profile-Additive (LP-Additive) bezeichnet.

Als wirksame LP-Additive sind thermoplastische hochmolekulare Polymere beschrieben worden (DE-PS 16 94 857), z. B. Polymerisate von Acryl- und Methacrylsäureestern wie Polymethylmethacrylat und Polyethylacrylat, Homo- und Copolymerisate von Vinylverbindungen wie Polystyrol und Polyvinylacetat, Celluloseester wie Celluloseacetatpropionat und -butyrat, wobei die Molekulargewichte zwischen 10 000 und 10 000 000 liegen können. Auch Substanzen mit geringerem Molekulargewicht, die bei Raumtemperatur flüssig bis harzartig und deshalb keine "Thermoplasten" im klassischen Sinn sind, sondern den Charakter von Weichmachern haben, sind als LP-Additive empfohlen worden (AT-PS 220 369), so z.B. Dibutylphthalat und Polypropylenadipinat.

Verarbeitet man die schwundarm härtbaren ungesättigten Polyesterharze in Form flächiger Formmassen ("Sheet Moulding Compounds" = "SMC" genannt) oder teigartiger Formmassen ("Bulk Moulding Compounds" = "BMC" genannt), so empfiehlt es sich im Interesse einer raschen und störungsfreien Eindickung mit chemischen Verdickern, wie z. B. Magnesiumoxid, Säuregruppen enthaltende LP-Additive zu wählen (DE-PS 19 53 062, DE-AS 21 04 575). Praktisch bewährt haben sich vor allem Homo- und Copolymerisate des Vinylacetats, weil sie den Polymerisationsschwund gut kompensieren und Formteile ergeben, deren Oberflächen befriedigend glatt und frei von Wellen sind.

Die meisten LP-Additive der genannten Art sind mit den benötigten hochreaktiven ungesättigten Polyesterharzen unverträglich, so daß nach einigen Stunden bis Tagen eine sichtbare Entmischung eintritt. Dies hat zur Folge, daß diese LP-Systeme als zwei getrennte Komponenten gelagert und geliefert werden müssen, was eine doppelte Anzahl von Vorratsbehältern mit den dazu gehörigen Rohrleitungen und Armaturen erfordert. Die Zusammenführung beider Komponenten stellt einen zusätzlichen Arbeitsgang dar, den man gerne vermeiden möchte.

Eine zweite Gruppe von LP-Additiven, die sich in der Praxis bewährt haben, umfaßt die oben erwähnten weichmacherartigen Substanzen, vorzugsweise gesättigte Polyester eines Molekulargewichts unter 20 000 mit sauren Gruppen, die einen sehr guten LP-Effekt ergeben und den Formteilen eine hervorragende Oberflächenbeschaffenheit hinsichtlich Glätte und Wellenfreiheit verleihen. LP-Additive dieser Klasse sind mit den ungesättigten Polyesterharzen verträglich, so daß sie, mit ihnen vermischt, über Monate gelagert werden können, ohne daß eine Trübung der Harzmischung oder eine sichtbare Entmischung in zwei Phasen zu beobachten wäre. Sie haben jedoch den Nachteil, daß sich ihr LP-Effekt bei längerer Lagerung der Polyesterharz/LP-Additiv-Mischungen verringert. Diese als "LP-Drift" bezeichnete Erscheinung macht es notwendig, das Material innerhalb weniger Wochen nach seiner Herstellung zu verarbeiten.

Aufgabe der Erfindung war es daher, schwundarm härtbare Formmassen auf Basis ungesättigter Polyesterharze bereitzustellen, die weder zur Phasentrennung neigen noch die oben beschriebene LP-Drift zeigen.

Überraschenderweise wurde nun gefunden, daß eine bestimmte Kombination von LP-Additiven das geschilderte Problem zu lösen vermag.

Gegenstand der Erfindung sind schwundarm härtbare Formmassen aus ungesättigtem Polyesterharz und schwundverminderndem Zusatz, dadurch gekennzeichnet, daß sie

A) 20 bis 70 gew.-% $\alpha,\beta$-ethylenisch ungesättigten Polyester,

B) 20 bis 70 gew.-% mit A) copolymerisierbare Vinyl und/oder Vinylidenverbindung,

C) 8 bis 29 gew.-% gesättigten Polyester mit einem Molekulargewicht $\overline{M}_n$ von 800 bis 10 000 welches ein Veresterungsprodukt ist mindestens einer Säure aus der Reihe Kohlensäure, gesättigte aliphatische,

alicyclische und aromatische $C_4$-$C_{12}$-Dicarbonsäuren, und mindestens eines gesättigten aliphatischen oder alicyclischen $C_2$-$C_8$-Diols und

D) 2 bis 6 gew.-% mit den Komponenten A) bis C) verträglichem Polyvinylacetat-homo oder -copolymerisat enthalten.

wobei sich die obigen Prozentangaben jeweils auf die Summe der Komponenten A) bis D) beziehen.

"US-A-4172059 beschreibt Formmassen auf Basis ungesättigter Polyesterharze, copolymerisierbare ethylenisch ungesättigter Monomere, ein viskositätsreduzierender Zusatz und als low-profile-Additive entweder gesättigter Polyester oder Polyvinylacetat. Mischungen beider Additive wurden ganz allgemein genannt.

US-A-3 862 064 beschreibt eine schwundarme härtbare Formmasse auf der Basis eines ungesättigten Polyesterharzes und eines schwundvermindernden Zusatzes welcher besteht aus einem copolymerisierbar ethylenisch ungesättigten Monomer, einem gesättigten Polyester und einem Zelluloseester. Durch den Zusatz wird der Schwund des ungesättigten Polyesterharzes verringert. FR-A-2 074 378 beschreibt eine schwundarme härtbare Formmasse auf der Basis eines ungesättigten Polyesterharzes und eines schwundvermindernden Zusatzes welcher besteht aus einem copolymerisierbar ethylenisch ungesättigten Monomer, einem gesättigten Polyester und einem Thermoplast. Bevorzugt wird PVC. Durch den Zusatz wird der Schwund des ungesättigten Polyesterharzes verringert.

$\alpha,\beta$-ethylenisch ungesättigte Polyester A im Sinne der Erfindung sind die üblichen Polykondensationsprodukte mindestens einer $\alpha,\beta$-ethylenisch ungesättigten Dicarbonsäure mit in der Regel 4 oder 5 C-Atomen oder deren esterbildenden Derivate, gegebenenfalls in Abmischung mit bis zu 200 Mol-%, bezogen auf die ungesättigten Säurekomponenten mindestens einer aliphatischen gesättigten Dicarbonsäure mit 4 - 10 C-Atomen, einer cycloaliphatischen oder aromatischen Dicarbonsäure mit 8 - 10 C-Atomen oder deren esterbildenden Derivate mit mindestens einer Polyhydroxyverbindung, insbesondere Dihydroxyverbindung, mit 2 - 8 C-Atomen - also Polyester, wie sie bei J. Björksten et al, ≫ Polyesters and their Applications , Reinhold Publishing Corp, New York, 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z. B. jedoch auch Mesaconsäure, Citraconsäure, Itaconsäure oder Chlormaleinsäure. Beispiele für die zu verwendenden aliphatischen gesättigten, cycloaliphatischen und aromatischen Dicarbonsäuren oder ihre Derivate sind Phthalsäure, Phthalsäureanhydrid, Isophthalsäure, Terephthalsäure, Hexa- oder Tetrahydrophthalsäure bzw. deren Anhydride, Endomethylentetrahydrophthalsäure und deren Anhydrid, Bersteinsäure bzw. Bernsteinsäureanhydrid, Bernsteinsäureester und -chloride, Glutarsäure, Adipinsäure, Sebacinsäure. Um schwerentflammbare Harze herzustellen, können z. B. Hexachlorendomethylentetrahydrophthalsäure, Tetrachlorphthalsäure oder Tetrabromphthalsäure verwendet werden. Bevorzugt zu verwendende Polyester enthalten Maleinsäurereste, die bis zu 25 Mol-% durch Phthalsäure- oder Isophthalsäurereste ersetzt sein können. Als zweiwertige Alkohole können Ethylenglykol, Propandiol-1,2, Propandiol-1,3, Diethylenglykol, Triethylenglykol, Dipropylenglykol, Butandiol-1,3, Butandiol-1,4, Neopentylglykol, Hexandiol-1,6, 2,2-Bis-(4-hydroxycyclohexyl)-propan, bis-oxalkyliertes Bisphenol A, Perhydrobisphenol und andere eingesetzt werden. Bevorzugt verwendet werden Ethylenglykol, Propandiol-1,2, Diethylenglykol, Dipropylenglykol und Neopentylglykol.

Weitere Modifikationen sind möglich durch Einbau bis zu 10 Mol-%, bezogen auf die Alkohol- bzw. Säurekomponente, ein- und mehrwertiger Alkohole mit 1 - 6 C-Atomen, wie Methanol, Ethanol, Butanol, Allylalkohol, Benzylalkohol, Cyclohexanol und Tetrahydrofurfurylalkohol, Trimethylolpropan, Glycerin und Pentaerythrit sowie von Mono-, Di- und Triallylethern und Benzylethern drei- und mehrwertiger Alkohole mit 3 - 6 C-Atomen gemäß DE-AS 10 24 654 sowie durch Einbau einbasischer Säuren wie Benzoesäure, oder langkettiger ungesättigter Fettsäuren wie Ölsäure, Leinölfettsäure und Ricinenfettsäure.

Die Säurezahlen der Polyester A sollen zwischen 10 und 100, vorzugsweise zwischen 20 und 70, die OH-Zahlen zwischen 10 und 150, vorzugsweise zwischen 20 und 100, und die Molekulargewichte $M_n$ zwischen ca. 500 und 5000, vorzugsweise zwischen ca. 1000 und 3000, liegen (dampfdruckosmometrisch gemessen in Dioxan und Aceton; bei differierenden Werten wird der niedrigere als der korrektere angesehen).

Zwar kann der Gehalt der in die Polyester A einkondensierten Reste $\alpha,\beta$-ethylenisch ungesättigter Dicarbonsäuren in weitem Bereich schwanken; da die aus den erfindungsgemäßen Formmassen hergestellten Teile nach dem Verpressen heiß entformt werden und infolgedessen eine zufriedenstellende Wärmestandfestigkeit aufweisen sollten, sind hoher Gehalt von Resten $\alpha,\beta$-ethylenisch ungesättigter Dicarbonsäuren von 0,70-0,20 Mol/100 g ungesättigtem Polyester bevorzugt.

Als copolymerisierbare Vinyl- und Vinylidenverbindungen B im Sinne der Erfindung eignen sich in der Polyestertechnologie gebräuchliche ungesättigte Monomere, die bevorzugt $\alpha$-substituierte Vinylgruppen oder $\beta$-substituierte Allylgruppen tragen, bevorzugt Styrol; aber auch beispielsweise kernchlorierte und -alkylierte bzw. -alkenylierte Styrole, wobei die Alkylgruppen 1-4 Kohlenstoffatome enthalten können, wie z.

3

B. Vinyltoluol, Divinylbenzol, α-Methylstyrol, tert.-Butylstyrol, Chlorstyrole; Vinylester von Carbonsäuren mit 2-6 Kohlenstoffatomen, bevorzugt Vinylacetat; Vinylpyridin, Vinylnaphthalin, Vinylcyclohexan, Acrylsäure und Methacrylsäure und/oder ihre Ester (vorzugsweise Vinyl-, Allyl- und und Methallylester) mit 1-4 Kohlenstoffatomen in der Alkoholkomponente, ihre Amide und Nitrile; Allylverbindungen wie Allylbenzol und Allylester wie Allylacetat, Phthalsäurediallylester, Isophthalsäurediallyester, Fumarsäurediallylester, Allylcarbonate, Diallylcarbonat, Triallylphosphat und Triallylcyanurat.

"Gesättigte Polyester" C im Sinne der Erfindung sind mit der Mischung der Komponenten A), B) und D) in ungehärtetem Zustand verträgliche, mit dem Copolymerisat aus den Komponenten A) und B) aber unverträgliche Polyester, die von mit Komponente B) copolymerisierbaren Doppelbindungen frei sind. "Verträglich" in diesem Sinne mit der Mischung der Komponenten A), B) und D) sind die gesättigten Polyester C) dann, wenn sie nach Zugabe zu dieser Mischung bei 25°C weder zu einer Trübung noch zu einer (unter dem Lichtmikroskop) deutlich sichtbaren Phasentrennung führen; "unverträglich" mit dem Copolymerisat aus den Komponenten A) und B) sind die gesättigten Polyester C), wenn man im Härtungsprodukt der Mischung A) + B) + C) mit Hilfe des Elektronenmikroskops, evtl. nach Anätzen mit Osmiumtetroxid, deutlich zwei Phasen erkennen kann.

Gesättigte Polyester C) sind Veresterungsprodukte mindestens einer Säure aus der Reihe Kohlensäure, gesättigte aliphatische, alicyclische und aromatische $C_4$-$C_{12}$-Dicarbonsäuren, die ggf. durch Chlor, Brom oder Methyl substituiert sein können, und mindestens eines gesättigten aliphatischen oder alicyclischen $C_2$-$C_8$-Diols, ggf. in Abmischung mit einem oder mehreren Polyethylen- bzw. -propylenglykolen mit einem Molekulargewicht von bis zu 400,
also Veresterungsprodukte von α,ω-Alkandicarbonsäuren, wie Adipinsäure, Sebacinsäure, von Benzoldicarbonsäuren, wie Phthal-, Iso- und Terephthalsäure, aliphatischen, cyclischen oder polycyclischen Dicarbonsäuren und ihren Substitutionsprodukten wie Tetra- und Hexahydrophthalsäure, Hexachlorendomethylentetrahydrophthalsäure, und Alkandiolen, wie Ethylenglykol, Propandiol-1,2, Butandiol-1,3, Ethergruppen-haltigen Diolen, wie Di-, Tri-, Tetra- und höheren Polyethylen- und -propylenglykolen.

Die gesättigten Polyester C) können auch mit Hilfe polyfunktioneller Verbindungen, die mehr als zwei reaktive Gruppen tragen, verzweigt werden, was z. B. mit drei- und vierbasischen Carbonsäuren, wie Trimellithsäure, Trimesinsäure oder Pyromellithsäure, und drei- und vierwertigen Alkoholen, wie Trimethylolethan und -propan sowie Pentaerythrit, geschehen kann. Anstelle der Carbonsäuren können natürlich auch immer deren reaktionsfähigen Derivate, vorzugsweise ihre Anhydride, eingesetzt werden. Ferner können bis zu 10 Mol-% der Dicarbonsäuren durch Diisocyanate, wie Toluylendiisocyanat, Hexamethylendiisocyanat, "Isophoron"diisocyanat oder Diphenylmethandiisocyanat, ersetzt werden oder bis zu 10 Mol-% der Diole durch Bisepoxide, wie Bisphenol-A-diglycidylether, Tetra- oder Hexahydrophthalsäurediglycidylester, Bis-(epoxipropyl)-anilin und andere.

Ferner können bis zu 10 Mol-% der Diole durch Bisepoxide wie Bisphenol-A-diglycidylether, Glycidylester mehrwertiger Säuren u.a. ersetzt werden.

Der Einbau der genannten Isocyanate oder Epoxide kann zur Kettenverlängerung von Vorkondensaten benutzt werden.

Weitere geeignete gesättigte Polyester C) erhält man durch Kondensation von Hydroxycarbonsäuren, wie Hydroxybuttersäure oder Hydroxycapronsäure, oder durch ringöffnende Polyaddition der entsprechenden Lactone.

Bevorzugte gesättigte Polyester C) besitzen Säurezahlen von 3 bis 30 und als Zahlenmittel bestimmte Molekulargewichte $\overline{M}_n$ von 800 bis 10 000, insbesondere von 1 200 bis 6 000 (bis zu Molekulargewichten von 5 000 dampfdruckosmometrisch, darüber membranosmometrisch bestimmt, wobei Aceton als Lösungsmittel verwendet wird).

Besonders bevorzugte gesättigte Polyester C) sind solche, deren Dicarbonsäurereste zu mindestens 70 Mol-% aus Adipinsäureresten bestehen, also z. B. Poly(ethylen/propylen)- und Polypropylenadipinate, Poly-(ethylen/diethylen)-phthalat/adipinate, Poly(propylen/dipropylen)-adipinate, wobei das Alkylen/Dialkylen-Mol-Verhältnis vorzugsweise 1:3 bis 3:1 beträgt.

Andere bevorzugte Polyester C) sind Phthal- und Terephthalsäureester von Ethylenglykol, Propylenglykol, Di- und Polyethylen- und -propylenglykolen sowie deren Mischungen.

Es empfiehlt sich, die Polyesterkomponenten so auszuwählen, daß der gesättigte Polyester C) nicht kristallisiert, aber das Polymerisat aus A), B) und C) bereits mit bloßem Auge als zweiphasig zu erkennen ist ("Weißeffekt"; vgl. DE-PS 16 94 857).

Bevorzugte Polyvinylacetate D) enthalten a) mindestens 50, im allgemeinen mindestens 75, Gew.-% einpolymerisierte Vinylacetatreste und b) einpolymerisierte Reste ethylenisch ungesättigter Monocarbonsäuren der Formel $C_mH_{2m-1}COOH$, in der m eine ganze Zahl von 3 bis 10 bedeutet, oder ethylenisch ungesättigter Dicarbonsäuren der Formel $C_nH_{2n-2}(COOH)_2$, in der n eine ganze Zahl von 2 bis 20 bedeutet, entsprechend einer Säurezahl von 1,2 bis 25 oder 0,1 bis 2 Gew.-% Carboxylgruppen, bezogen auf Polyvinylacetat D). Bevorzugte Säuren sind Acryl- und Methacrylsäure sowie Maleinsäure. Aber auch neutrale Polyvinylacetate sind als Komponente D) geeignet.

Beispiele für Comonomere, die sich zur Herstellung der Polyvinylacetate C) vorzugsweise eignen, sind Vinylchlorid, Vinylidenchlorid, Glycidylacrylat, Glycidylmethacrylat, (Meth-)Acrylamid, (Meth-)Acrylnitril, Styrol, Ethylen, Propylen. Bevorzugte Polyvinylacetate D) sind auch Ethylen/Vinylacetat-Copolymerisate mit bis zu 5 Gew.-% einpolymerisierter Ethylenreste. Die bevorzugtesten Polyvinylacetate D) sind jedoch diejenigen, deren nicht-saure Komponente allein aus Polyvinylacetat besteht.

Die bevorzugten Polyvinylacetate D) besitzen inhärente Viskositäten (nach ASTM D 1243-58 T) von 0,12 bis 1,0, im allgemeinen von 0,12 bis 0,68 und insbesondere von 0,19 bis 0,52.

Die geschilderten Polyvinylacetate D) werden z. B. in der DE-AS 21 04 575 beschrieben.

Die erfindungsgemäßen Formmassen lassen sich am einfachsten durch Vereinigen der Lösungen der Komponenten A), C), und D) in Komponente B) unter Rühren bei Raumtemperatur oder leicht erhöhter Temperatur herstellen.

Zur Stabilisierung können den erfindungsgemäßen Formmassen übliche Polymerisationsinhibitoren, die eine vorzeitige, unkontrollierte Gelierung verhindern, beispielsweise Hydrochinon, Toluhydrochinon, p-Benzochinon, p-tert.-Butylbrenzcatechin, Chloranil, Naphthochinon, Kupferverbindungen oder p-Nitrosodimethylanilin, in wirksamen Mengen zugesetzt werden.

Um die erfindungsgemäßen Formmassen in Preßmassen zu überführen, werden ihnen üblicherweise Härtungskatalysatoren, gegebenenfalls chemische Verdicker, Verstärkungsmaterialien, Füllstoffe und eventuell weitere Hilfs- und Zusatzstoffe einverleibt.

Als Härtungskatalysatoren eignen sich beispielsweise Benzoylperoxid, tert.-Butylperbenzoat, tert.-Butylperoxid, Cyclohexanonperoxid, tert.-Butylperoctoat, Azoisobutyrodinitril, Cumolhydroperoxid in den üblichen Mengen.

Bekannte chemische Verdicher sind die Oxide und Hydroxide der Metalle der 2. Hauptgruppe des Periodensystems, bevorzugt die Oxide und Hydroxide des Magnesiums und Calciums.

Die chemische Verdickung beschleunigende oder regelnde Zusätze sind z. B. Wasser oder Zusätze gemäß DE-OS 15 44 891, wie z. B. aliphatische Carbonsäuren und partielle Phosphorsäureester.

Übliche Zuschlagstoffe sind inerte anorganische Füllstoffe, wie Calciumcarbonat, Silikate, Tonerden, Kalk, Kohle, verstärkende Fasern, wie Glasfasern, auch in Form von Geweben oder Matten, Kohlefasern, synthetische organische Faser, Baumwolle, Asbest oder Metallgewebe, organische und anorganische Pigmente, Farbstoffe, Gleit- und Trennmittel, wie Zinkstearat, UV-Absorber usw.

Die Vermischung der erfindungsgemäßen Formmassen mit Polymerisationsinhibitoren, Radikalbildnern, chemischen Verdickern und den üblichen Zuschlagstoffen kann in Knetern, Dissolvern oder auf einem Walzenstuhl erfolgen.

Anstelle oder neben Glasfasern können auch Glasfasermatten oder Glasfasergewebe zur Herstellung thermisch härtbarer Preßmassen eingesetzt werden. In diesem Falle erfolgt Tränkung der Glasfasermatten durch die zu härtende Formmasse, der sich im allgemeinen eine 1-bis 10tägige Lagerung in geschlossenen Behältern, beispielsweise unter Verwendung von Abdeckfolien, anschließt.

Die chemische Verdicker enthaltenden Preßmassen können unter einem Druck von ca. 20-140 kp/cm$^2$ bei ca. 120-160° C, je nach Größe und Form in ca. 0,5-5 Minuten gehärtet werden, wobei Formteile mit sehr gutem LP-Effekt sowie hervorragender Oberflächenglätte und Wellenfreiheit erhalten werden.

Anmerkungen zu den Beispielen:

Als Komponente A dient ein ungesättigter Polyester aus Maleinsäureanhydrid und Propylenglykol-1,2 mit einer Säurezahl von 30 und einer OH-Zahl (Acetylierung) von 48, dessen 65 gew.-%ige Lösung in Styrol bei 20° C eine Viskosität von 1100 mPa.s aufweist.

Als Komponente B dient Styrol.

Als Komponente C dienen gesättigte Polyester, deren molare Zusammensetzung und Kennzahlen tabellarisch aufgeführt sind.

| Komponente | C1 | C2 | C3 |
|---|---|---|---|
| Adipinsäure | 1,00 | 1,00 | 1,00 |
| Ethylenglykol | 0,60 | 0,40 | 0,38 |
| Propylenglykol-1,2 | 0,40 | 0,62 | 0,60 |
| Säurezahl | 13 | 12 | 28 |
| OH-Zahl | 11 | 28 | 27 |
| Viskosität, 70%ig, bei 20°C | 3700 | | |
| Toluylendiisocyanat-2,4 | - | 0,025 | - |
| Bisphenol-A-diglycidylether | - | - | 0,024 |
| Säurezahl | - | 12 | 13 |
| Viskosität, 70%ig, bei 20°C | - | 3300 | 2100 |

Der Polyester C2 war mit Toluylendiisocyanat-2,4, der Polyester C3 mit Bisphenol-A-diglycidylether kettenverlängert. Alle Produkte wurden 70 gew.-%ig in Styrol gelöst.

Als Komponente D dient ein Carbonsäuregruppen enthaltendes Polyvinylacetat mit einer Säurezahl von 7. Die 40 %ige Lösung der Komponente D in Styrol zeigt bei 25°C eine Viskosität von 5000 mPa.s.

Vergleichsbeispiel 1

| Rezeptur | Gew.-Tl. |
|---|---|
| Harz | 100 |
| Cobaltoctoatlösung in Styrol (1 % Co) | 1,0 |
| p-Benzochinon, 10 % in Styrol | 0,7 |
| tert.-Butyl-perbenzoat | 1,5 |
| Zinkstearat | 5,5 |
| Kreide | 200 |
| Magnesiumoxidpaste (40 % MgO in inertem Harz) | 2,5 |
| 27 % Glasfasern, 2400 - 80 tex, 26/26/52 mm | |

Die Bezeichnung "Harz" bedeutet hierbei eine frisch bereitete Mischung aus den Komponenten A, B und C (wie oben definiert) im Gewichtsverhältnis A : B : C = 41 : 40 : 19, wobei für C eingesetzt wurde

```
         im Versuch 1:    Komponente C1,
                     2:   "           C2,
                     3:   "           C3.
```

Die obengenannten Gewichtsangaben für A und C beziehen sich auf die lösemittelfreien Substanzen.

Man stellt nach der obengenannten Rezeptur Harzmatten (SMC) her und verpreßt diese nach fünftägigem Reifen zu 2 mm dicken quadratischen Platten von 40 cm Seitenlänge. Die Platten sind auf der Rückseite mit Rippen von 2 mm Dicke und 9 mm Höhe versehen; die Vorderseite des Werkzeugs ist poliert. Die Werkzeugtemperatur beim Pressen beträgt auf der Rückseite 140°C, auf der Vorderseite 145°C. Beurteilt wird der Polymerisationsschrumpf (kaltes Teil gegenüber kaltem Werkzeug, gemessen entlang der Kante) sowie Oberflächenglätte und -glanz (visuell).

Ergebnisse (negative Schrumpfwerte bedeuten Ausdehnung bei der Polymerisation)

Versuch 1:    Schrumpf -0,1 %; kein Einfall über der Rippe sichtbar; Oberfläche praktisch wellenfrei; hoher Glanz.

Versuch 2:    Schrumpf -0,02 %; kein Einfall über der Rippe sichtbar; Oberfläche wellenfrei; hoher Glanz.

Versuch 3:    Schrumpf -0,02 %; kein Einfall über der Rippe sichtbar; Oberfläche weitgehend wellenfrei; guter bis befriedigender Glanz.

Vergleichsbeispiel 2

Man wiederholt Beispiel 1 mit der Abwandlung, daß die als "Harz" bezeichnete Komponente vor der Herstellung der Harzmatte vier Wochen lang bei 35°C gelagert wird. Die Abmusterung der gepreßten Platten ergibt folgende Ergebnisse:

Versuch 1: Schrumpf +0,03 %; Einfall über der Rippe deutlich sichtbar; Oberfläche wellig; Glanz mangelhaft.

Versuch 2: Schrumpf +0,03 %; starker Einfall über der Rippe; Oberfläche deutlich wellig; Glanz mangelhaft.

Versuch 3: Schrumpf +0,03 %; starker Einfall über der Rippe; Oberfläche stark wellig; Glanz mangelhaft.

Beispiel 1

Man wiederholt die Versuche aus Vergleichsbeispiel 1 und 2 mit der Abwandlung, daß der als "Harz" bezeichneten Komponente 10 Gew.-% einer 40 %igen styrolischen Lösung der Komponente D (wie in den obengenannten Anmerkung definiert) zugesetzt werden.

Die Abmusterung der Platten ergibt folgendes Bild:

Versuch 1: Schrumpf -0,01 bis -0,02 %; kein Einfall über der Rippe sichtbar; Oberfläche praktisch wellenfrei; hoher Glanz.

Versuch 2: Schrumpf -0,02 %; kein Einfall über der Rippe sichtbar; Oberfläche wellenfrei; hoher Glanz.

Versuch 3: Schrumpf -0,01 bis -0,02 %; kein Einfall über der Rippe sichtbar; Oberfläche praktisch wellenfrei; hoher Glanz.

Diese Ergebnisse werden unabhängig davon erhalten, ob die zur Herstellung der Harzmatten verwendete Harzkomponente frisch zubereitet oder vier Wochen lang bei 35°C gelagert worden ist. Platten aus frischem und gelagertem Harz sind visuell nicht reproduzierbar zu unterscheiden.

Beispiel 2

Man wiederholt Versuch 2 aus Vergleichsbeispiel 2 mit der Abwandlung, daß der als "Harz" bezeichneten Komponente 5 Gew.-% bzw. 20 Gew.-% der in Beispiel 3 verwendeten Polyvinylacetatlösung zugesetzt werden. Die Abmusterung von Platten, die unter Verwendung von 4 Wochen lang bei 35°C gelagertem Harz gepreßt worden sind, ergibt folgendes Bild:

Versuch mit 5 % Polyvinylacetatlösung:

Schrumpf +0,02 %; schwacher Einfall über der Rippe; Oberfläche schwach wellig; Glanz ausreichend.

Vergleichsversuch mit 20 % Polyvinylacetatlösung:

Schrumpf nicht meßbar bis 0,01 %; kein Einfall über der Rippe sichtbar; Oberfläche rauh.

Vergleichsbeispiel 3

Man bereitet eine Harzmatte unter Benutzung der in Vergleichsbeispiel 1 angegebenen Rezeptur, wobei die Bezeichnung "Harz" jedoch eine frisch bereitete Mischung aus den Komponenten A, B und D im Gewichtsverhältnis A : B : D = 46 : 46 : 4 bedeutet (die Gewichtsangaben für A und D beziehen sich auf die lösemittelfreien Substanzen). Die Verpressung einer aus frisch bereitetem Harz hergestellten Harzmatte ergibt eine Platte mit +0,16 % Schrumpf, sehr starkem Einfall über der Rippe, stark welliger Oberfläche und ausreichendem Glanz.

**Patentansprüche**

1. Schwundarm härtbare Formmassen aus ungesättigtem Polyesterharz und schwundverminderndem Zusatz, dadurch gekennzeichnet, dass sie

A) 20 bis 70 gew.-% $\alpha,\beta$-ethylenisch ungesättigten Polyester,

B) 20 bis 70 gew.-% mit A) copolymerisierbare Vinyl und/oder Vinylidenverbindung,

C) 8 bis 29 gew.-% gesättigden Polyester mit einem Molekulargewicht $\overline{M}_n$ von 800 bis 10 000 welches ein Veresterungsprodukt ist mindestens einer Säure aus der Reihe Kohlensäure, gesättigte aliphatische, alicyclische und aromatische $C_4$-$C_{12}$-Dicarbonsäuren, und mindestens eines gesättigten aliphatischen oder alicyclischen $C_2$-$C_8$-Diols und

D) 2 bis 6 gew.-% mit den Komponenten A) bis C) verträglichem Polyvinylacetat-homo oder

EP 0 171 591 B1

-copolymerisat enthalten.
wobei sich die obigen Prozentangaben jeweils auf die Summe der Komponenten A) bis D) beziehen.

**2.** Formmassen nach Anspruch 1, dadurch gekennzeichnet, dass sie 12 bis 22 gew.-% der Komponente C) enthalten.

**3.** Formmassen nach Ansprüchen 1-2, dadurch gekennzeichnet, dass sie gesättigte Polyester C) mit einem Molekulargewicht $\overline{M}_n$ von 1 200 bis 6 000 enthalten.

**4.** Formmassen nach Ansprüchen 1-3, dadurch gekennzeichnet, dass das Polyvinylacetaat D) 0,1 bis 2,0 gew.-% Carboxylgruppen enthalt.

**Claims**

**1.** Low-shrink curable moulding materials made from unsaturated polyester resin and shrink-reducing additive, characterized in that they contain
A) 20 to 70 wt% of $\alpha,\beta$-ethylenically unsaturated polyester,
B) 20 to 70 wt% of vinyl and/or vinylidene compound copolymerizable with A),
C) 8 to 29 wt% of saturated polyester with a molecular weight $\overline{M}n$ of 800 to 10,000 that is an esterification product from at least one acid from the range of carbonic acid and saturated aliphatic, alicyclic and aromatic $C_4$-$C_{12}$ dicarboxylic acids and at least one saturated aliphatic or alicyclic $C_2$-$C_8$ diol and
D) 2 to 6 wt% of a polyvinyl acetate homo- or copolymer compatible with components A) to C),
the above percentages each relating to the sum of components A) to D).

**2.** Moulding materials according to Claim 1, characterized in that they contain 12 to 22 wt% of component C).

**3.** Moulding materials according to Claims 1-2, characterized in that they contain saturated polyester C) with a molecular weight $\overline{M}n$ of 200 to 6,000.

**4.** Moulding materials according to claims 1-3, characterized in that the polyvinyl acetate D) contains 0.1 to 2.0 wt% carboxyl groups.

**Revendications**

**1.** Masses à mouler durcissables à faible retrait faites de résine polyester insaturée et d'additifs diminuant le retrait, caractérisée en ce qu'elles contiennent
A) de 20 à 70% en poids de polyester $\alpha,\beta$-éthyléniquement insaturé,
B) de 20 à 70% en poids de composé de vinyle et/ou de vinylidène copolymérisable avec A),
C) de 8 à 29% en poids de polyester saturé d'un poids moléculaire $M_n$ allant de 800 à 10 000, qui est un produit d'estérification d'au moins un acide de la série de l'acide carbonique, des acides dicarboxyliques en $C_{4-12}$ aliphatiques, alicycliques et aromatiques saturés, et d'au moins un diol en $C_{2-8}$ aliphatique ou alicyclique saturé, et
D) De 2 à 6% en poids d'homo- ou copolymère d'acétate de polyvinyle compatible avec les composants A) à C),
les indications en pourcentage ci-dessus se rapportant à chaque fois à la somme des composants A) à D).

**2.** Masses à mouler selon la revendication 1, caractérisées en ce qu'elles contiennent de 12 à 22% en poids de composant C.

**3.** Masses à mouler selon les revendications 1-2, caractérisées en ce qu'elles contiennent un polyester satur'e C ayant un poids moléculaire $M_n$ allant de 1200 à 6000.

**4.** Masses à mouler selon les revendications 1-3, caractérisées en ce que l'acétate de polyvinyle D) contient de 0,1 à 2,0% en poids de groupes carboxyles.

8